# EUROPEAN PATENT APPLICATION

(11) **EP 3 671 496 A1**
(43) Date of publication of application: **24.06.2020**
(21) Application number: 19217754.1
(22) Date of filing: 18.12.2019
(51) Int. Cl.: G06F 21/10

(54) **SYSTEMS AND METHODS FOR RECORDING LICENSING OR USAGE OF AVIATION SOFTWARE PRODUCTS USING SHARED LEDGER DATABASES**

(30) Priority: 21.12.2018 US 201816230424
(71) Applicant: Honeywell International Inc., Morris Plains, NJ 07950 (US)
(72) Inventor: RAB, Abdur, Morris Plains, NJ New Jersey 07950 (US); THIRUMALAIVENJAMUR, Prashanth, Morris Plains, NJ New Jersey 07950 (US); V, Arivazhagan, Morris Plains, NJ New Jersey 07950 (US); JAYARAJAN, Keerthi, Morris Plains, NJ New Jersey 07950 (US)
(74) Representative: Haseltine Lake Kempner LLP

(57) **Abstract**

Methods and system use blockchain technology for recording information pertaining to the licensing or usage of aviation software products. For example, a method may include: receiving, from a user of aviation software products, a purchase order to purchase a license to use an aviation software product; creating a first block including license issuance information representing issuance of the license to the user; adding the first block to a copy of a blockchain; providing the aviation software product to the user; receiving, from the user, a second block including usage information indicating usage of the aviation software product by the user; and adding the second block to the copy of the blockchain.

## Description

### TECHNICAL FIELD

Various embodiments of the present disclosure generally relate to the use of shared ledger databases and other blockchain technology to record information and, more particularly, to systems and methods that use shared ledger databases and other blockchain technology to record information pertaining to the licensing or usage of aviation software products.

### BACKGROUND

Aviation software products, such as aviation databases, are used by aircraft avionics systems onboard aircraft. Usage of aviation databases and other software may be subject to regulatory compliance. For example, various regulatory authorities around the world require navigational databases to be updated based on the 28-day cycle set by Aeronautical Information Regulation and Control (AIRAC). Accordingly, regulatory authorities and other parties may desire to conduct audits from time to time to determine regulatory compliance.

Therefore, there is a need for methods and systems for recording information pertaining to the licensing or usage of aviation software products, such that the information is later retrievable for auditing use. Additionally, there is a need for the recorded information to be resistant to subsequent alteration and to be electronically accessible. The present disclosure is directed to addressing one or more of these above-referenced challenges.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed for using blockchain technology to record information pertaining to the licensing or usage of aviation software products. A method according to some examples of the present disclosure includes: receiving, from a user of aviation software products, a purchase order to purchase a license to use an aviation software product; creating a first block including license issuance information representing issuance of the license to the user; adding the first block to a copy of a blockchain; providing the aviation software product to the user; receiving, from the user, a second block including usage information indicating usage of the aviation software product by the user; and adding the second block to the copy of the blockchain.

A system according to some examples of the present disclosure includes a memory storing instructions; and one or more processors configured to perform operations. The operations include: receiving, from a user of aviation software products, a purchase order to purchase a license to use an aviation software product; creating a first block including license issuance information representing issuance of the license to the user; adding the first block to a copy of a blockchain; providing the aviation software product to the user; receiving, from the user, a second block including usage information indicating usage of the aviation software product by the user; and adding the second block to the copy of the blockchain.

Furthermore, a non-transitory computer-readable medium, according to some examples of the present disclosure, stores instructions that, when executed by one or more processors of a computer system, cause the one or more processors to perform operations. The operations include: receiving, from a user of aviation software products, a purchase order to purchase a license to use an aviation software product; creating a first block including license issuance information representing issuance of the license to the user; adding the first block to a copy of a blockchain; providing the aviation software product to the user; receiving, from the user, a second block including usage information indicating usage of the aviation software product by the user; and adding the second block to the copy of the blockchain.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts a network of nodes, according to one or more embodiments.
FIG. 2 depicts a flowchart of a method of using blockchain technology to record information pertaining to for the licensing and usage of aviation software products, according to one or more embodiments.
FIG. 3 depicts a process of using a blockchain to record information regarding the issuance of a license for use of an aviation software product, according to one or more embodiments.
FIG. 4 depicts a process of using a blockchain to record information regarding the usage of an aviation software product, according to one or more embodiments.
FIG. 5 is a data flow diagram illustrating the use of a blockchain in storing information for auditing use and the retrieval of information by an auditor.

### DETAILED DESCRIPTION OF EMBODIMENTS

In general, systems and methods of the present disclosure utilize blockchain technology to record information, such as information pertaining to the licensing or usage of aviation software products.

As will be discussed in more detail below, a network comprising various computer systems may manage a blockchain used for the recording of information. The computer systems of the network may belong to parties such as suppliers and users of aviation software products, and may function as nodes of the network. A navigation database is an example of an aviation software product that may be sought by a user, such as an airline. When an airline purchases a license for a navigation database from a supplier, the supplier may record information representing the issuance of the license in the blockchain. Then, when the airline installs the aviation software product onto the avionics system of its aircraft, information representing the installation may be recorded into the blockchain. The blockchain may advantageously store the information in a manner that is resistant to subsequent alteration. Additionally, the blockchain may advantageously allow for the information to be readily accessible for auditing use.

In the following description, embodiments will be described with reference to the accompanying drawings. The terminology used in this disclosure may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a" and "an" include plural referents unless the context dictates otherwise. The term "exemplary" is used in the sense of "example" rather than "ideal." The terms "information," "data," and "content" may be interchangeable when permitted by context. The terms "record" and "store," in the sense of recording or storing data, may be interchangeable when permitted by context. The terms "comprises," "comprising," "includes," "including," and other variations thereof, are intended to cover a non-exclusive inclusion such that a process, method, or product that comprises a list of elements does not necessarily include only those elements, but may include other elements not expressly listed or inherent to such a process, method, article, or apparatus.

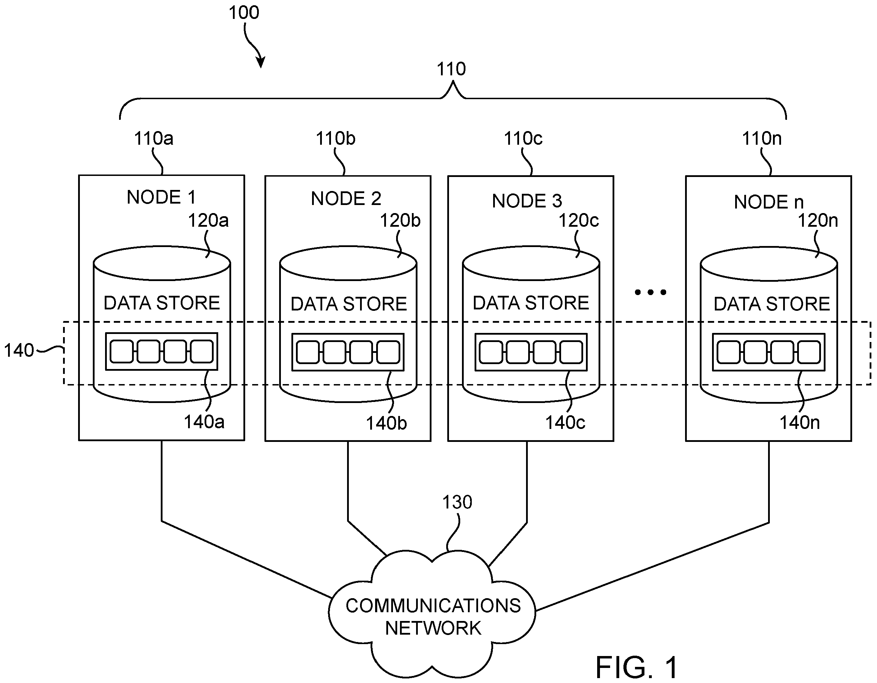

FIG. 1 illustrates an example of a network 100 according to the present disclosure. Network 100 also serves as an example of an environment for implementing various methods and systems according to the present disclosure. The network 100 may include a plurality of nodes 110, such as nodes 110a, 110b, 110c and 110n illustrated in the figure. The nodes 110 may be connected to each other through a communications network 130.

In general, any of the nodes 110 may be a computer system. In this disclosure, the term "computer system" generally encompasses any device or combination of devices, each device having at least one processor that executes instructions from a memory. Additionally, a computer system may be part of another computer system.

The total number of nodes, which is represented in the figure as "n," is not limited to any specific number. Depending on the implementation, the total number of nodes may, for example, be 2 or more, 5 or more, 10 or more, 100 or more, or hundreds or more. The communications network 130 by which the nodes 110 communicate with each other may be a public communications network (such as the internet), a private communications network, or a communications network comprising a combination of public and private network elements. The communication path between nodes 110 may include any link, such through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed. Each of the nodes 110 may have a hardware communications interface to communicate with other nodes.

Any one or more of the nodes 110 may include a data store, such as data stores 120a, 120b, 120c, 120n shown in FIG. 1. The data store of any of the nodes 110 may, for example, be a database or a file system implemented by a memory of a computer system.

Network 100 may be a network that manages a database shared among the nodes 110 of the network 100. In the example shown in FIG. 1, the shared database is exemplified as blockchain 140, which may include a growing list of records, called blocks, which are linked and secured using cryptography techniques. Each block may include a cryptographic hash of the previous block, a timestamp, and data that is recorded by the block, such as data including information pertaining to licenses for aviation software products and the usage of such licenses.

Network 100 may also be referred to as a blockchain network that comprises nodes 110. Blockchain 140 may serve as an open, distributed ledger in which any of the nodes 110 in the network 100 may record information, such as information on transactions or usage of product licenses, in a verifiable and permanent manner. The term "shared database" in this disclosure encompasses the concept of distributed ledgers, which may also be referred to as shared ledgers. A blockchain is an example of a distributed ledger.

The network 100 managing the blockchain 140 may be a peer-to-peer network of nodes 110 that collectively adhere to one or more protocols for various operations involving inter-node communication and management of blockchain 140, such as the addition and validation of new blocks. The blockchain may be managed such that the data recorded in any given block cannot be altered retroactively without the alteration of all subsequent blocks, in the absence of collusion of a majority of the member nodes 110 to alter the data. Accordingly, the blockchain 140 may provide data recorded therein with resistance to subsequent modification.

According to some embodiments, blockchain 140 may be a permissioned blockchain, such as a private blockchain or a consortium blockchain. In such embodiments, membership in being a node in the network 100 may be restricted to pre-approved computer systems and/or computer systems belonging to pre-approved parties. In other implementations, it is also possible for the blockchain 140 to be a public blockchain, such as a blockchain without any access restrictions.

The nodes 110 in the network 100 may have different functions, permissions, or privileges in performing operations pertaining to usage of the blockchain. Such operations include the submission a new block to the network 100 for validation, the validation of a new block, and storage of a copy of the blockchain 140. For example, it is possible for some of the nodes 110 to have only permission to read data from the blockchain 140, while not having permission to submit new blocks for validation or take part in the validation of new blocks. In general, whenever the nodes 110 are collectively described in this disclosure as performing a particular action or process involving the blockchain 140, it is understood that the action or process may be performed by all or only a portion of the nodes 110.

Copies of the blockchain 140 may be stored in data stores of one or more of the nodes 110 of the network 110. For example, the data stores 120a, 120b, 120c, 120n of the nodes 110a, 110b, 110c, 110n, shown in FIG. 1 may each store a respective local copy 140a, 140b, 140c, 140n of the blockchain 140. A local copy of the blockchain 140 may be a full copy or a partial copy of the blockchain 140. In general, whenever information is described in this disclosure as being added to the blockchain 140, the addition of the information to blockchain 140 may be understood as the addition of the information to the copies of the blockchain 140 stored by all or a sufficient number of the nodes 110 that are relied upon for storage of a copy of the blockchain 140.

While FIG. 1 illustrates nodes that store local copies of the blockchain 140, network 100 may include nodes that do not store any copies of the blockchain 140, but nonetheless take part in other operations involving the blockchain 140, such as the generation of new blocks for the blockchain 140 and the validation new blocks generated by other computer systems of the network 110. Nodes that do not store local copies of the blockchain 140 may have access to the local copies stored on one or more of the computer systems that do store local copies of the block chain.

The nodes 110 of network 100 may be operated by various parties. In examples that apply methods and systems of the present disclosure to the aviation industry, parties that may operate nodes 110 in network 100 include organizations that operate aircraft (such as airlines and freighting or shipment companies), organizations that are involved with the production, licensing, or distribution of aviation software products (such as producers or suppliers of aviation software products), and organizations that audit licenses of aviation software products. For example, in FIG. 1, node 110a may be a computer system of a supplier of aviation software products, node 110b may be a computer system of a first airline, and node 110c may be a computer system of an aircraft operated by the first airline. In this example, the network 100 may further include a fourth computer system that is operated by a second airline, a fifth computer system that is operated by a shipping company.

The computer system operated by the first airline may be operated to purchase an aviation software product (e.g., a navigational database) from the computer system of the supplier. Subsequently, data representing information related to the purchase, such as information on the purchase or issuance of the license and information on the usage of the license or the product, may also be stored in the blockchain 140. Examples of using of the blockchain 140 for management of such information are discussed below in more detail.

As noted above, the nodes 110 of network 100 may include a computer system of an aircraft. An aircraft may be an airplane, a helicopter, an unmanned aerial vehicle (UAV), or other type of aircraft. A computer system of an aircraft may, for example, include a flight management system (FMS) or other system used in the control or operation of the aircraft. Such computer systems may be part of the avionics onboard the aircraft, and may be coupled to a display inside the aircraft, such as a cockpit display. However, the nodes 110 of network 100 may, in general, include off-board computer systems that are off-board any aircraft, and/or computer systems comprising a combination of on-board and off-board components. Additionally, the communications network 130 may include elements permitting communication between computer systems on-board aircraft and computer systems on the ground.

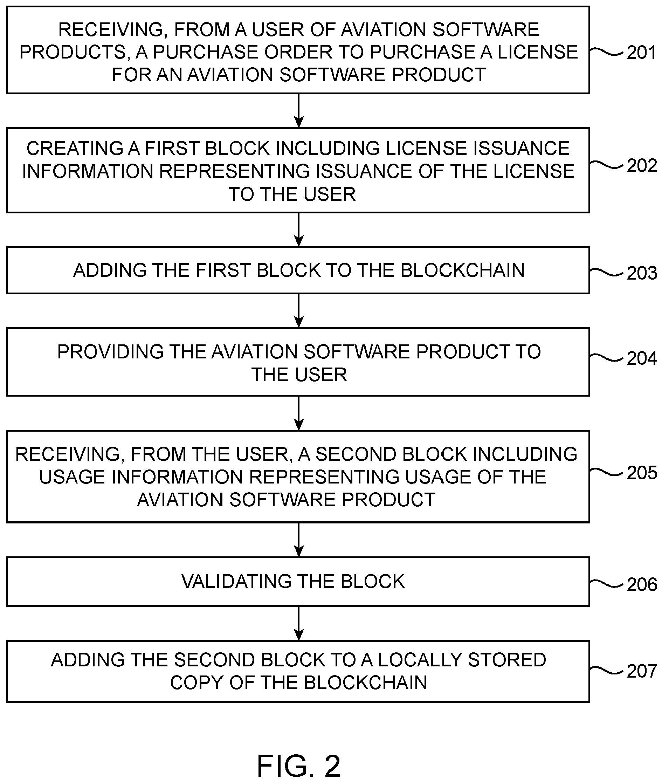

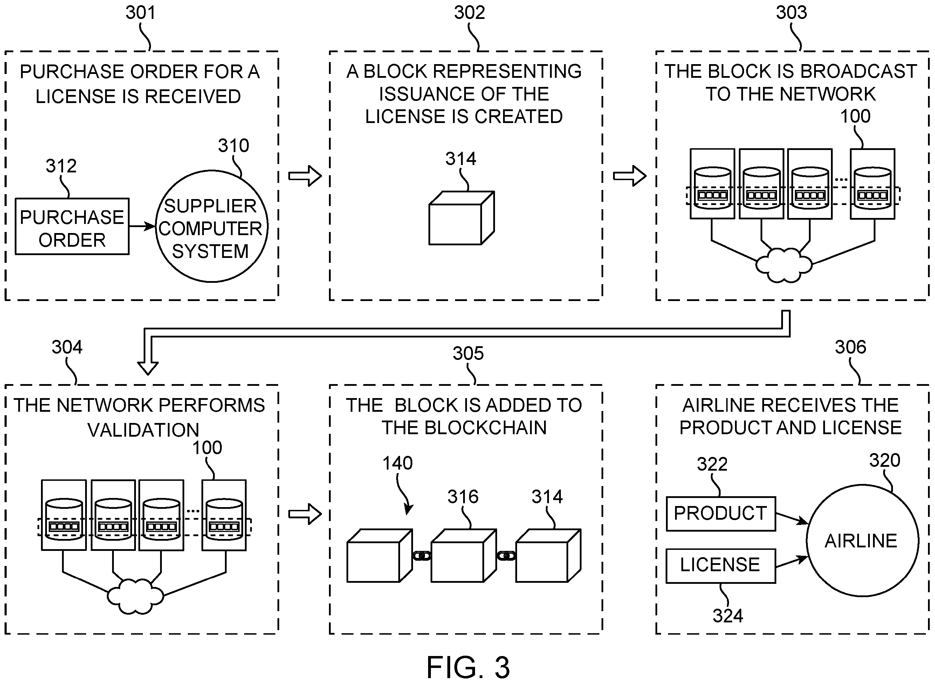

FIG. 2 is a flowchart showing an example method of using a blockchain to record information pertaining to the licensing and usage of aviation software products. The method of FIG. 2 may be performed by a computer system that is a node of the network 100, such as the computer system of the supplier of aviation software product discussed above. The process includes the following operations: receiving, from a user of aviation software, a purchase order to purchase a license for an aviation software product (operation 201); creating a first block including license issuance information representing issuance of the license to the user (operation 202); adding the first block to the blockchain (operation 203); providing the aviation software product to the user (operation 204); receiving, from the user, a second block including usage information representing usage of the aviation software product (operation 205); validating the block (operation 206); and adding the second block to a locally stored copy of the blockchain (operation 207). Examples of the operations in FIG. 2, as well as additional processes related to these operations, are provided below with reference to FIGS. 3-4.

FIG. 3 illustrates an example of using blockchain 140 to record information regarding the issuance of a license. In step 301 of the process, a supplier receives a purchase order 312 to purchase a license for aviation software product. The purchaser may be airline 320, as labeled in step 306.

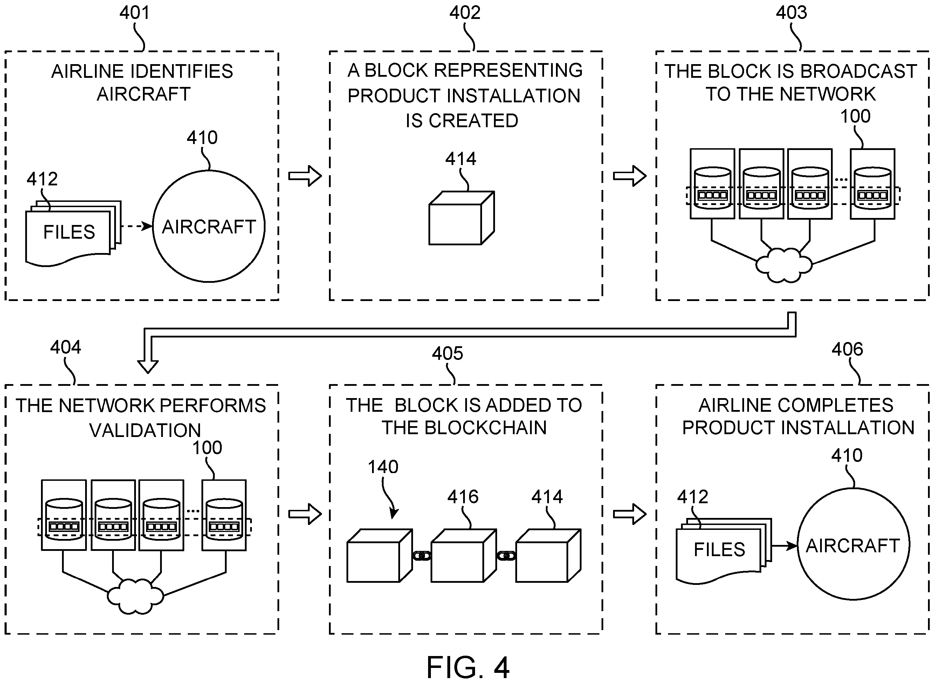

In general, operations performed by the supplier as part of the processes of FIGS. 3 and 4 may be performed by a computer system operated by the supplier, such as supplier computer system 310. This computer system may include a data broker system or a data server. Therefore, in step 301, the purchase order may be electronically sent by the airline 320 and electronically received by the supplier computer system 310 over the communications network 130. Additionally, the supplier computer system 130 may be one of the nodes 110 in network 100 shown in FIG. 1. Operations performed by the supplier computer system 310 also serve as examples of various operations the process shown in FIG. 2. For example, the receipt of purchase order 312 by the supplier computer system 310 in step 301 of FIG. 3 is an example of operation 201 of FIG. 2. Additionally, the airline 320 shown in FIG. 3 is an example of the user of aviation software products recited in operation 201 of FIG. 2.

The supplier may be an organization that licenses an aviation software product that the airline 320 desires. Examples of aviation software products include computer programs, software libraries, and data used by aviation systems. Examples of data used by aviation systems include aircraft data, avionics data, flight data, data gathered by aircraft for use by other aircraft, and aviation databases. Examples of aviation databases include navigation databases, weather databases, terrain databases, and other databases used by aircraft avionics or flight crew personnel. In the context of licensed software product, the purchase of a license for a software product may also be generally referred as a purchase of that product, and the purchase of a software product may be in the form of the purchase of a license for that product or include such purchase of the license as a component of the purchase of the product.

According to some examples, the aviation software product sought by the airline is a navigation database. A navigation database (NAVDB) may be used by a flight management system (FMS) of an aircraft for worldwide data on airports, runways, localizers, navigation aids, waypoints, and other information. In some examples, the NAVDB may include source data supplied by another party. For example, the supplier computer system 310 may validate the source data and filter the source data for customization. Such customization may be based on aircraft usage or other factors.

A license for an aviation software product may be a license to use the aviation software product in accordance with terms specified in the license. The supplier computer system 310 may charge the airline for NAVDB licenses based on the number of aircraft tails. For example, an airline that operates a plurality of aircraft may purchase a license for each individual aircraft (e.g., each aircraft tail number). In such a scenario, each license issued by the supplier computer system 310 may be valid for use only on an aircraft having a specific tail number. The airline may also purchase a license for a certain total number of aircraft. In either scenario, the total number of aircraft that are actually using the NAVDB would be equal to or less than the total number of aircraft for which use of the aviation software product is licensed.

The aviation software product may be a product that is periodically supplied to aircraft avionics so as to remain current. For example, the NAVDB may be supplied to the FMS as a loadable binary file, and the database (or update of the database) may be supplied to the FMS every 28 days, in accordance with the 28-day Aeronautical Information Regulation and Control (AIRAC) cycle. This practice of updating the database every 28 days is an example of actions for compliance with regulatory mandates that the NAVDB used during flights be kept current.

The term "product" in this disclosure encompasses products that include upgrades or updates provided over a period of time. The license issued by the supplier computer system 310 may, for example, provide for the subscription of upgrades or updates to the product through a certain period of time. Accordingly, the purchase order 312 may request and result in the purchase of a subscription and the entering of a subscription agreement between the airline 320 and the supplier computer system 310. Thus, an aviation software product may include an initially supplied set of files in conjunction with one or more subsequently supplied sets of files that upgrade or update the initial set of files.

In step 302 of FIG. 3, a block 314 representing one or more transactions between the airline 320 and the supplier is created. Block 314 may be created by the supplier computer system 310, in accordance with an example of operation 202 of FIG. 2. Block 314 is an example of the first block recited in operation 202 of FIG. 2.

The one or more transactions represented by block 314 may include the issuance of the license from the supplier to the airline 320. Other examples of acts that may be part of the one or more transactions represented by the block 314 include transactions pertaining to the purchase order 312, such as the receipt or processing of the purchase order by the supplier, and transactions involving payment for the license, such as receipt by the supplier of payment sent by the airline 320.

In general, transactions represented by block 314 may occur prior to, concurrently with, or subsequent to the creation of the block. In particular, the issuance of the license and receipt of the payment for the license may occur prior to, concurrently with, or subsequent to the creation of the block. Transactions that have not yet occurred at the time of block creation may be represented by block 314 as an intended or prospective transaction, such as an intention to issue the license. Such transactions may, optionally, be subject to approval by the network 100 (during the validation process of step 304, discussed below), in which case the initiation or completion of the transaction (e.g., issuance of license) by the acting party (e.g., the supplier) may be conditioned upon successful validation (approval) of the transaction by the network 100. Transactions occurring prior to or concurrently with the creation of block 314 may be consummated without validation by the network.

Block 314 may include license issuance information representing issuance of the license to the purchaser, which is the airline 320 in this example. In accordance with the above discussion, whenever a block or information in a block is described as "representing issuance of the license," it is understood that "issuance of the license" is an act that may or may not have occurred at the time of creation of the block.

License issuance information may include information (e.g., a name, ID, or other identifier) identifying the purchaser (e.g., the airline), information (e.g., a name, ID, or other identifier) identifying the supplier, and/or information (e.g., a license identifier such as a license number) identifying the license for the aviation software product. The license may be a license that has been issued or will be issued upon successful approval by the network. The license information may further include information indicating the purchase order (e.g., the time of submission of the purchase order, the characteristic of the license sought by the purchase order), information indicating the version of the product being licensed (e.g., the version identifier, such as a version number, of an aviation database), information indicating a particular use of the aviation software product permitted by the license (e.g., an identifier of an aircraft, such as the aircraft's tail number, on which the aviation database is licensed for use), information indicating the payment transaction (e.g., receipt of payment for the license by the supplier, an identifier of the payment by the purchaser), information indicating a time of issuance of the license (if the license has already been issued), and/or information indicating the duration of the license. The license issuance information, or any part thereof, may be stored in block 314 in any format (e.g., unencrypted plaintext, encrypted, encoded, etc.) that is suitable for later use of the information, such as auditing use. License issuance information may also be referred to as licensing information.

Block 314 may further include information to link block 314 to an existing block of the blockchain 140. The existing block of the blockchain for purposes of the linkage may be the most recently added block of the blockchain 140. In FIG. 3, block 316 shown in process step 305 of FIG. 3 is the most recently added block of the blockchain 140, and serves as an existing block to which new block 314 may be linked. The information to link block 314 to block 316 may, for example, be a hash of block 316 (e.g., hash of the data content of block 316) or some data derived from the previous block 316. In some embodiments, the information to link to the existing block may be included in the header of block 314. Block 314 may further include a timestamp indicated the time at which the block was created.

After having created block 314, the supplier computer system 310 may add block 314 to the blockchain 140 (in accordance with operation 203 of FIG. 2) by initiating the sequence shown in steps 303 through 305 of FIG. 3.

In step 303, block 314 is broadcast to the network 100. For example, the supplier computer system 310, after having created block 314, may send the block to other nodes in network 100, over the communications network 130. The network 100 may then perform a validation process, as shown in step 304.

In the validation process, nodes 110 of the network 100 may individually determine whether to validate block 314 and/or any of the one or more transactions represented by block 314. In this context, validation of block 314 may serve as approval for block 314 to be added to the blockchain 140. Validation of the one or more transactions may serve as approval for the transactions to proceed, if such approval is utilized by the network 100 as a condition for transactions to proceed. In general, all or only a subset of the nodes 110 of the network 100 may perform validation. In certain implementations, any node that stores a local copy of the blockchain 140 may perform validation.

Validation may include determining whether block 314 and/or the one or more transactions represented by block 314 are valid based on one or more criteria. A node that performs validation may make such determination based on any data available to the node, which may include existing data stored in the blockchain 140.

For example, a node that performs validation may verify that block 314 was created by a party with the ability to perform the one or more transactions 314, wherein successful verification may serve as the sole criterion or one among multiple criteria for validation of block 314 and/or the one or more transactions represented by block 314. For example, to validate block 314 representing the issuance of a license, the node may verify that block 314 was created by a proper supplier of the license.

Additionally or alternatively, the node performing validation may verify that the content of block 314 is valid, wherein successful verification may serve as the sole criterion or one among multiple criteria for validation of block 314 and/or the one or more transactions represented by block 314. For example, the node participating in validation may verify that the contents of one or more fields in the license issuance information collectively describe a valid the issuance of the license. This process may, for example, include determining whether the license issuance information indicates a valid combination of a purchaser, a supplier, a license number, a product identifier (e.g., navigation database ID), a valid product version identifier (e.g., the current version or cycle number of the navigation database), and/or payment information.

Additionally or alternatively, the node performing validation may verify that a certain event has occurred, wherein successful verification may serve as the sole criterion or one among multiple criteria for validation of block 314 and/or the one or more transactions represented by block 314. An example of such an event includes receipt of the license and/or aviation software product by the purchaser (e.g., airline 320). Such verification may be based on information provided by the purchaser through a communication over the communications network 130, or based on information within a network operated by the purchaser, if the node performing validation belongs to the purchaser.

In the validation process of step 304, the nodes participating in the validation process may validate other data included in block 314, such as the timestamp or the information linking block 314 to an existing block of the blockchain. Additionally, different nodes may perform validation differently and/or may use different criteria for validation. For example, the computer system that created block 314 may automatically validate block 314.

In step 305, block 314 is added to the blockchain 140. The addition of block 314 to blockchain 140 may be realized by the addition block 314 to the local copies of blockchain 140 (e.g., local copies 140a, 140b, 140c, 140n) by the respective nodes. When block 314 is added to blockchain 140 its position in the chain may be immediately subsequent to the previously added block 316.

In some examples, a node that performed validation may automatically add block 314 to the locally stored copy of blockchain 140 upon successful validation of block 314 (and/or the one or more transactions represented by block 314) by the same node. For example, the supplier computer system 310 may update its local copy of blockchain 140 to include block 314 after creating block 314, if validation of block 314 is automatic. Similarly, the airline may update its local copy of blockchain 140 to include block 314 upon receiving the licensed aviation software product from the supplier, if such receipt resulted in validation of block 314.

Additionally or alternatively, any of the nodes in the network 110 may add block 314 to its locally stored copy of blockchain 140 upon determining that the network 110 has reached a consensus on validation of block 314 and/or the one or more transactions represented by block 314.

In implementations that utilize a determination of consensus as a condition for adding blocks to blockchain 140, consensus may be reached by any suitable type of consensus protocol. For example, the network 100 may be deemed to have reached a consensus (and the block 314 is deemed to be approved for addition to the blockchain 140) if a certain threshold (e.g., more than 50% or at least 51%) of the nodes participating in the validation process have validated block 314 and/or the one or more transactions represented by block 314.

The determination of consensus may utilize any suitable process algorithm, such as a practical Byzantine fault tolerance (PBFT) algorithm. For example, each node that has performed validation may broadcast a consensus message indicating the result of its validation determination to one or more computer systems in the network 100. Then, consensus may be reached when the one or more computer systems receiving the consensus messages has determined that the number of nodes expressing approval has reached a certain threshold.

In step 306 of FIG. 3, the airline 320 receives the aviation software product 322 and the license 324. The supplier computer system 310 may provide the aviation software product 322 to the airline 320 (in accordance with operation 204 of FIG. 2) by, for example, transmission of the aviation software product over communications network 130. While step 306 is illustrated in FIG. 3 as taking place after step 305, step 306 may instead take place at any time after step 301. As mentioned earlier, transactions represented by block 314 (such as the issuance of the license) may occur prior to, concurrently with, or subsequent to the creation of block 314. In some examples, step 306 may be conditioned upon successful consensus on validation.

While an example of the process of FIG. 3 has been described in which block 314 is created by the supplier computer system 310, it is also possible for block 314 to be created by another party, such as the airline 320. In such a situation, the party or node that created block 314 (e.g., airline 320) may broadcast block 314 to the network during step 303. Additionally, the general methodology illustrated in FIG. 3 is applicable to the addition of blocks containing other types of information to be record into the blockchain 140.

FIG. 4 illustrates a process of adding product usage information to blockchain 140. The process may include steps 401 through 406, as illustrated in the figure. Step 401 may take place after the airline has received the product 322 from the supplier. For example, step 401 may take place after step 306 of FIG. 3.

In step 401, airline 320, having received the purchased aviation software product 322, identifies the aircraft 410 onto which the files 412 of the aviation software product 322 are to be loaded. Identification may be based on the tail number of the aircraft 410 and may be performed using a data loader. Examples of data loaders include ARINC data loaders and data loaders for Honeywell International Inc.'s Epic avionics systems.

In step 402 of FIG. 4, a block 414 representing usage of the aviation software product is created. The block 414 may be created by the computer system of the aircraft 410, or by a computer system of the airline 320 that is not part of the aircraft avionics, such as a data server or data broker of the airline 320. Usage may be an event in which the product is used, such as installation of the product (or some version or update of the product) on aircraft avionics, and/or continued usage of the product on the aircraft avionics. In the example of FIG. 4, the usage of the aviation software product is exemplified as the installation of the aviation software product. Additionally, it is noted that the usage of an aviation software product may also be referred to as a usage of the license.

In general, the creation of block 414 may be prior to, concurrently with, or subsequent to the usage represented by block 414. If the creation of block 414 occurs prior to the usage (e.g., prior to the installation), then block 414 may be said to represent an intended or prospective usage of the aviation software product. In this case, it is possible for the initiation or completion of usage (e.g., installation on an aircraft) to be conditioned upon successful validation (approval) of the usage by a consensus of the network 100.

Block 414 may include usage information representing the usage of the aviation software product. It is noted that whenever a block or information therein is described as "representing issuance of the license," it is understood that "issuance of the license" is an act that may or may not have occurred at the time of creation of the block.

Examples of usage information include: an identifier (e.g., tail number) of an aircraft on which the aviation software product is used; the type of usage (e.g., a new installation of the aviation software product, installation of an update of an existing installation of the aviation software product, current usage of a certain version of the aviation software product, etc.); an identifier of the user of the aviation software product (e.g., an ID of the airline using the aviation software product); a timestamp of the usage (e.g., a timestamp indicating the time at which the aviation software product or an update thereof was installed, or a timestamp indicating a time at which a particular version of the aviation software product is being used); information on the parties involved with the usage (e.g., the party transmitting the files to be installed on aircraft avionics and the party receiving the files); information identifying the particular license (e.g., a license identifier such as a license number or a serial number) that provided permission for the usage; a version identifier indicating a version of the aviation software product currently being used by the aircraft avionics (e.g., the version identifier number of a navigation database that was installed or is in current use); a database part number; and an AIRAC effective date. The usage information, or any part thereof, may be stored in block 414 in any format (e.g., unencrypted plaintext, encrypted, encoded, etc.) that is suitable for later use of the information, such as auditing use.

As in the case of block 314 of FIG. 3, block 414 may include information to link block 414 to an existing block of the blockchain 140. This information for linking to an existing block may be a hash of the existing block (e.g., hash of the content of the previous block) or some data derived from the previous block. In some embodiments, the information to link to the existing block of the blockchain may, for example, be part of the header of block 414. Block 414 may also include a timestamp indicating the time at which block 414 was created.

The existing block of the blockchain for purposes of the linkage may be the most recently added block of the blockchain 140. In the illustrated example, block 416 shown in process step 405 of FIG. 4 is the most recently added block of the blockchain 140, and may be the block to which block 414 is to be linked. Additionally, since step 402 of FIG. 4 may occur subsequent to step 305 of FIG. 3, block 416 of FIG. 4 may be the same block as block 314 added in step 305 of FIG. 3, or a block that is subsequent to block 314.

The party or computer system that created block 414 may add the block 414 to the blockchain 140 by initiating the sequence shown in steps 403 through 405 of FIG. 4, which includes broadcasting to the network 100, as shown in step 403. The network 100 may then perform validation, as shown in step 404.

In the validation process, nodes 110 of the network 100 may individually determine whether to validate block 414 and/or the usage of the aviation software product represented by block 414. In this context, validation of block 414 may serve as approval for block 414 to be added to the blockchain 140. Validation of the one or more transactions may serve as approval for the usage to proceed, if such approval is utilized by the network 100 as a condition for usage of the software aviation product.

The general methodologies discussed above for the validation of block 314 are generally applicable to the validation of block 414. All or only a subset of the nodes 110 of the network 100 may perform validation. Validation may include determining, based on satisfaction of one or more criteria, whether block 414 and/or the usage represented by block 414 are valid.

For example, a node that performs validation may verify that a certain event has occurred, wherein successful verification may be the sole criterion or one among multiple criteria for validation of block 414 and/or the usage represented by the block 414. An example of such an event is the loading of the aviation software product onto a data loader or the avionics system of the aircraft 410. The airline or avionics system of the aircraft 410 may provide information to indicate such loading, which may be used by the validating node for validation.

Additionally or alternatively, a node performing validation may verify that the usage information included in the block 414 accurately documents a proper usage (actual or intended) of the aviation software product, wherein successful verification may be the sole criterion or one among multiple criteria for validation of block 414 and/or the usage represented by block 414, . For example, the node performing validation may verify that the user of the aviation software product is a proper licensee of the aviation software product, and that usage of the aircraft is in compliance with the license (e.g., whether usage on an aircraft of a certain aircraft tail number is licensed).

Different nodes may perform validation differently and/or may use different criteria for validation. For example, the computer system that created block 414 may automatically validate the license issuance information. Additionally, in the validation process of step 404, the nodes participating in the validation process may validate other data included in block 414, such as the timestamp or the information linking the block 414 to an existing block of the blockchain 140. Accordingly, the validation process of step 404 may also be referred to as a process of validating the block 414.

In step 405, block 414 is be added to the blockchain 140. The addition of block 414 to blockchain 416 may be realized by the addition of the block to the local copies of blockchain 140 (e.g., local copies 140a, 140b, 140c, 140n). Block 414 may be added so as to sequentially follow the previously added block 416.

In some examples, a node that performed validation may automatically add block 414 to the locally stored copy of the blockchain 140 upon completing successful validation of block 414 and/or the usage represented by block 414. Additionally or alternatively, any of the nodes in the network 110 may add block 414 to the locally stored copy of the blockchain 140 upon determining that the network 110 has reached a consensus on validation of block 414 and/or the usage represented by the block 414. For example, consensus may be reached by any suitable type of consensus protocol. As an example, the network 100 may be deemed to have reached a consensus (and block 414 is deemed to be validated) if a certain threshold (e.g., more than 50% or at least 51%) of the nodes 110 performing validation have successfully validated block 414 and/or usage represented by block 414. The process of arriving at consensus may use any suitable method, such as the methods discussed above for step 305 of FIG. 3.

In step 406 of FIG. 4, the airline completes the installation of the aviation software product on aircraft 410. Step 406 may occur at any time after step 401, and not necessarily after step 405.

The files 412 of the aviation software product may be installed in a computer system of the aircraft avionics, such as a flight management system or other computer system on-board the aircraft. After identifying the tail number (step 401 of FIG. 4), the files 412 may be loaded onto the aircraft avionics using a data loader, such as a data loader of the types discussed above.

The loading of files 412 onto the avionics of aircraft 410 may be performed as part of aircraft maintenance by personnel inside the cockpit or at-wing. Maintenance may be performed when the aircraft 410 is in a scheduled maintenance cycle, and may include the transfer of files (such as database files) to the aircraft and loading the files into the target avionics via data loading under a protocol such as A615-3. Maintenance may be performed at the aircraft 410 via a handheld maintenance device connected wirelessly to the aircraft gateway.

The storage of information in blockchain 140 in the manner discussed above for FIGS. 3 and 4, for example, generates immutable records that can provide regulatory compliance for the supplier or any other party in the network 100. The blockchain 140 permits an efficient method of tracking subscriptions of products licensed from the supplier.

In the process illustrated in FIG. 3, the operations performed by various nodes 110 in the network 100 serve as examples of various operations in FIG. 2. For example, referring back to FIG. 2, a computer system (e.g., the supplier computer system 310) may perform the operation of receiving, from the user, a second block including data representing usage of the aviation product and data to link the first block to an existing block of a blockchain (operation 205) during step 403 of FIG. 4. The computer system (e.g., the supplier computer system 310) may perform validation (operation 206) during step 404 of FIG. 4 by being one of the computer systems participating in the validation. The computer system (e.g., supplier computer system 310) may perform the operation of adding the second block to a locally stored copy of the blockchain (operation 207) during step 405 of FIG. 4. For example, the supplier computer system 310 may add block 414 to its locally stored copy of the blockchain 140 upon determining that the network 100 have validated the usage represented by block 414.

While steps 302 through 305 of FIG. 3 and steps 402 through 405 of FIG. 4 illustrate specific of updating the blockchain 140 under certain contexts, the methodologies in these steps are applicable to adding information to the blockchain 140 in general by any node 110 in the network 100, without limitation as to the particular computer party or the particular information being stored in the blockchain 140. For example, in step 402 of FIG. 4, the block may represent other information, such as information indicating receipt of the license by the airline 410, or usage information pertaining to usage of the product 322 by aircraft 410.

Furthermore, while blocks 314 and 414 have described as two respective blocks in the foregoing description, it is also possible for the information of these blocks to be contained in a single block.

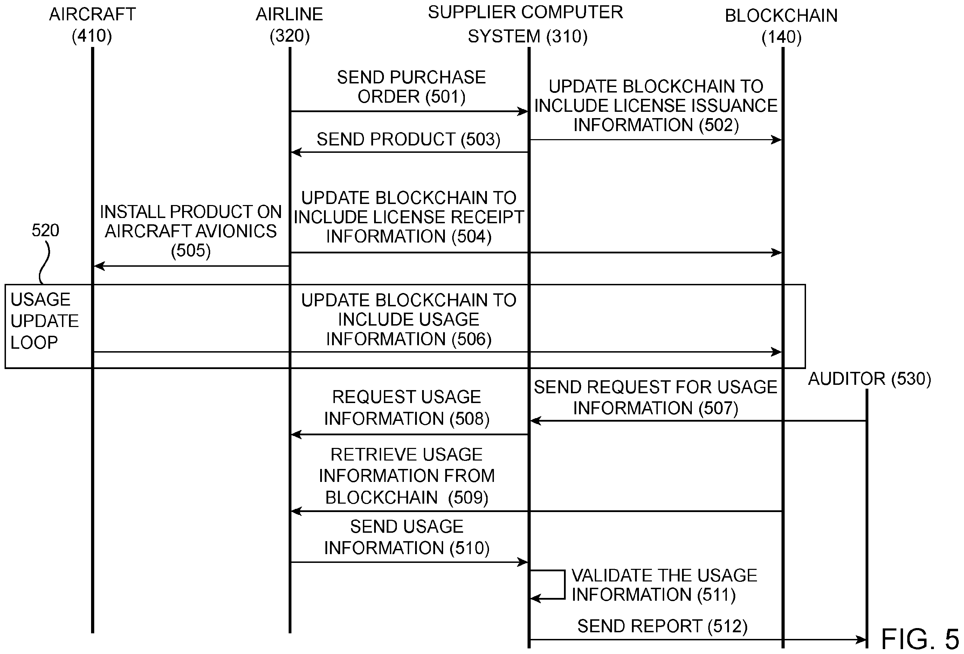

FIG. 5 is a data flow diagram illustrating the use of the blockchain 140 in storing information for auditing use and the retrieval of information by an auditor. The diagram illustrates data flow involving aircraft avionics 410, airline 320, supplier computer system 310, blockchain 140, and auditor 530. The auditor 530 may be any party seeking to audit information stored in the blockchain 140, such as a regulatory auditor, an internal auditor of the supplier, an internal auditor of the airline 320, or an air traffic controller. The auditor 530 may request the information for purposes of conducting an audit, which may be, for example, a supplier audit, a regulatory audit, an airline audit, or other type of audit. In some embodiments, the actions in FIG. 5 performed by auditor 530 may be performed by an auditor computer system that is configured to electronically transmit and receive data to and from the vendor computer 310 in the manner shown in FIG. 5. Additionally, in general, any data that is transmitted to or from vendor computer system 310 may be transmitted over one or more electronic communications networks, such as communication network 130 in FIG 1.

In operation 501, the airline 320 sends a purchase order to the supplier computer system 310 to purchase a license for an aviation software product. In operation 502, the supplier computer system 310 updates the blockchain 140 to include license issuance information. Operation 502 may be performed in the manner discussed above for the process illustrated in FIG. 3. In operation 503, the supplier computer system 310 sends the product purchased by the airline 320 to the airline 320.

In operation 504, the airline 320 updates the blockchain 140 to include license receipt information. For example, the airline 320 may add a new block to the blockchain 140 that includes license receipt information according to the block-adding methodology described above. License receipt information may generally indicate that the airline 320 has received the license and may include a date (or timestamp) of the receipt of the license, and/or information pertaining to the characteristics of the issued license. Examples of information pertaining to the characteristics of the issued license include information identifying the particular license (e.g., a license serial number or other identifier), the version of the product (e.g., the version identifier of an aviation database), terms of the license, a particular licensed use (e.g., the tail number of the aircraft to which the license applies), and/or a date (or timestamp) for the issuance of the license.

In operation 505, the airline 320 installs the product on the avionics of aircraft 410. Then, in step 506 a computer system of the airline 320 (e.g., a computer system onboard or off-board aircraft 410) updates the blockchain 140 to include data representing usage information. Operation 505 may be repeated multiple times in a loop 520. The usage information in the initial updating of the blockchain 140 may describe an installation of the product on the aircraft avionics. Subsequent usage information may describe continued usage of the product and/or installation of a new update of the aviation software product. Thus, operation 506 may occur during each update of the aviation software product, or at times in between updates.

Any of the information stored in the blockchain 140 may be retrieved for auditing, as shown in FIG. 5. In step 507, the auditor 530 sends a request for information for auditing use. In the illustrated example, the requested information is usage information. Upon receiving the request, the supplier computer system 310 may then request the airline 320 to provide usage information, in operation 508.

Then, in operation 509, the airline 320 retrieves the requested usage information from the blockchain 140. For example, the airline 320 may retrieve the usage information from its locally stored copy of the blockchain 140, or from a copy of the blockchain 140 stored on another node of the network 100.

In step 510, the airline 320 sends the usage information to the supplier computer system 310, when then validates the usage information in step 511. Validation may, for example, involve verification that the information provided by the airline 320 is correct. The supplier computer system 310 may, for example, compare the information provided by the airline with its own records, which may include its local copy of the blockchain 140.

After validating the usage information, the supplier computer system 310 may update the blockchain 140 with the result of the validation. The supplier computer system 310 may update its own copy of the blockchain 140 with a block representing the result of the validation, and may send the block to other nodes 110 in the network 100 so that the block is stored in copies of the blockchain that are respectively stored in the other nodes 110.

In step 512, the supplier computer system 310 sends the usage information to the auditor. The usage information may include an identifier (such as a tail number) of an aircraft on which the aviation software product is used. Such identifier may have been recorded into the blockchain 140 in step 506. Accordingly, usage of the aviation software product may be tracked for each tail number, for example.

While an example of the auditing process is illustrated in FIG. 5, it is understood that the auditing process may involve different parties or requests to audit other information. For example, the audit request in step 507 may alternatively or additionally request information on the issuance of the license. Furthermore, the information provided to the auditor may come from other members of the network 100.

As noted above, the actions performed by auditor 530 may be performed by an auditor computer system that is configured to electronically transmit and receive data to and from the supplier computer system 310 in the manner shown in FIG. 5. In some embodiments, the auditing process may be performed automatically. For example, the auditor computer system may send an audit request (operation 507) electronic. Such audit request may, for example, be sent based on an automatic process. Then, the supplier computer system 310 may perform operation 508 automatically in response to receiving the audit request, a computer system of the airline may perform operations 509 and 510 automatically in response to receiving the request for usage information, and the supplier computer system 310 may perform operations 511 and 512 automatically upon obtaining the usage information from the airline.

By using blockchain technology, various embodiments of this disclosure may realize the benefit of providing efficient tracking and recording of aircraft configuration, such as the navigation databases used by aircraft avionics. In particular, the blockchain may permit the storage of immutable record for use in auditing for regulatory compliance, and the ability for information stored in the blockchain to be audited efficiently, in an automated manner that may reduce paperwork.

Additionally, as discussed above with reference to step 512 of FIG. 5, the blockchain may be used to store information that tracks the usage of an aviation software product for specific aircraft identifiers (e.g., tail numbers). Such information that associates usage with tail numbers may be readily retrieved from the block chain and provided to an auditor.

Accordingly, various embodiments of this disclosure make it possible to support the development of robust systems for optimizing data distribution, configuration control, and regulatory compliance for aerospace needs.

While various examples discussed above pertain to storing information pertaining to licenses for aviation software products and the usage of such products, it is understood that the methodologies of the present application may apply to storage of information pertaining to purchase transactions involving other products, such as aviation equipment and avionics components, and usage of those products. Furthermore, while applications to the aviation industry have been discussed in various examples of this disclosure, the methodologies in this disclosure is not For example, the aspects of "aviation software product(s)" and "license for an aviation software product" in the method of FIG. 2 may be replaced by "product," and the aspect of "information indication issuance of the license to the user" in the method of FIG. 2 may be replaced by "information indicating a purchase transaction of the product."

In general, any process discussed in this disclosure that is understood to be computer-implemented or capable of being computer-implemented may be performed by one or more processors. The one or more processors may be configured to perform such processes by having access to instructions (software or computer-readable code) that, when executed by the one or more processors, cause the one or more processors to perform the processes. A processor may be one or more CPU(s), GPU(s), and/or other processing units.

The one or more processors may be part of a computer system. Any processor in a computer system may be a processor that included in a device that may include additional components, such a memory, a data communication infrastructure, and a bus connecting the one or more processors to the memory or the data communication infrastructure. Such device may further include a display and user input devices, such as a keyboard, mouse, or touchscreen. The one or more processors of a computer system may be part of a single device or may be distributed among a plurality of networked devices.

Instructions executable by one or more processors may be stored on a computer-readable medium. The term "computer-readable medium" may include any medium that is capable of storing, encoding, or carrying a set of instructions for execution by a processor or that cause a computer system to perform any one or more of the methods or operations disclosed herein.

A computer-readable medium may be a memory, which may be part of a computer system. A memory of a computer system may be any combination of volatile and/or non-volatile memory, and may be coupled to one or more processors of the computer system. Examples of non-volatile memory include solid-state storage media (e.g., solid state drives), optical storage media (e.g., optical discs), and magnetic storage media (e.g., hard disk drives).

The computer readable medium may be non-transitory. Examples of non-transitory computer-readable medium include solid-state storage media (e.g., solid state drives), optical storage media (e.g., optical discs), and magnetic storage media (e.g., hard disk drives). Non-transitory computer-readable medium may be separate from any processor or may serve as a memory of a computer system that is coupled to one or more processors.

Therefore, whenever a computer-implemented method is described in this disclosure, this disclosure shall also be understood as describing a non-transitory computer-readable medium storing instructions that, when executed by one or more processors, cause the one or more processors to perform the computer-implemented method.

Instructions executable by one or more processors may additionally or alternatively be transmitted or received over a network via a transmission medium, which may also be a computer-readable medium. Transmission media includes coaxial cables, copper wire and fiber optics, including the wires that comprise a bus subsystem. Transmission media also may also take the form of acoustic or light waves, such as those generated during radio wave and infrared data communications. The transmission medium may be bearing a propagated signal detectable by at least one processor of the one or more processors and including or representing the instructions.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Thus, while certain embodiments have been described, those skilled in the art will recognize that other and further modifications may be made thereto without departing from the spirit of the invention, and it is intended to claim all such changes and modifications as falling within the scope of the invention. For example, functionality may be added or deleted from the block diagrams and operations may be interchanged among functional blocks. Steps may be added or deleted to methods described within the scope of the present invention.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted.

## Claims

1. A computer-implemented method for recording information using blockchain technology, the method comprising:
receiving, from a user of aviation software products, a purchase order to purchase a license to use an aviation software product;
creating a first block including license issuance information representing issuance of the license to the user;
adding the first block to a copy of a blockchain;
providing the aviation software product to the user;
receiving, from the user, a second block including usage information indicating usage of the aviation software product by the user; and
adding the second block to the copy of the blockchain.

2. The computer-implemented method of claim 1, wherein the aviation software product is an aviation database.

3. The computer-implemented method of claim 2, wherein
the usage of the aviation software product indicated by the usage information is an installation of the aviation database on an avionics system of an aircraft, and
the usage information includes an identifier of the aircraft.

4. The computer-implemented method of claim 2, wherein
the aviation database is a navigation database, weather database, or terrain database,
the usage information indicates one or more of:
a version of the aviation database that is in use on an avionics system of an aircraft,
a database part number of the aviation database that is use on the avionics system of the aircraft, and
an AIRAC effective date of the usage, and
the usage information further indicates an identifier of the aircraft.

5. The computer-implemented method of claim 1, further comprising, after the creating the first block:
sending the first block to a plurality of nodes of a network managing the blockchain, such that the plurality nodes validate the first block and add the first block to copies of the blockchain respectively stored in the plurality of nodes.

6. The computer-implemented method of claim 1, further comprising:
receiving, from an auditor computer system, a request to provide the usage information;
in response to receiving the request, sending a request to the user to provide the usage information;
receiving the usage information from the user; and
in response to receiving the usage information, validating the usage information and sending the usage information to the auditor computer system.

7. The computer-implemented method of claim 1, wherein
the usage of the aviation software product indicated by the usage information is on an avionics system of an aircraft, and
the usage information includes an identifier of the aircraft.

8. A computer system for recording information using blockchain technology, the computer system comprising:
a memory storing instructions; and
one or more processors configured to perform operations including:
receiving, from a user of aviation software products, a purchase order to purchase a license to use an aviation software product;
creating a first block including license issuance information representing issuance of the license to the user;
adding the first block to a copy of a blockchain;
providing the aviation software product to the user;
receiving, from the user, a second block including usage information indicating usage of the aviation software product by the user; and
adding the second block to the copy of the blockchain.

9. The computer system of claim 8, wherein the aviation software product is an aviation database.

10. The computer system of claim 9, wherein
the usage of the aviation software product indicated by the usage information is an installation of the aviation database on an avionics system of an aircraft, and
the usage information includes an identifier of the aircraft.
